(19) Europäisches Patentamt
European Patent Office
Office européen des brevets

(11) **EP 4 287 521 A1**

(12) **EUROPEAN PATENT APPLICATION**

(43) Date of publication:
**06.12.2023 Bulletin 2023/49**

(21) Application number: **22176669.4**

(22) Date of filing: **01.06.2022**

(51) International Patent Classification (IPC):
**H04B 7/024** (2017.01)    **H04B 7/08** (2006.01)

(52) Cooperative Patent Classification (CPC):
**H04B 7/024; H04B 7/088**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
- KNUDSEN, Knud
  **Aabybro (DK)**

- NIELSEN, Kim
  **Storvorde (DK)**
- CAPORAL DEL BARRIO, Samantha
  **Aalborg (DK)**
- SABOURI-SICHANI, Faranaz
  **Aalborg (DK)**
- VEJLGAARD, Benny
  **Gistrup (DK)**
- SVENDSEN, Simon
  **Aalborg (DK)**

(74) Representative: **Nokia EPO representatives**
**Nokia Technologies Oy**
**Karakaari 7**
**02610 Espoo (FI)**

(54) **ENHANCED MEASUREMENT REPORTING FOR SHARED BEAM MODE BETWEEN PCELL AND SCELL**

(57)    An apparatus comprising means for: determining orientation of the apparatus; receiving reference signals of a non-serving cell; measuring signal quality of the non-serving cell for a beam that is used for the serving cell; determining based on the orientation of the apparatus a first antenna gain index for the non-serving cell with said beam in response to adding the non-serving cell as a secondary cell in multicarrier connectivity with a serving cell using the same antenna configuration for shaping an antenna beam that provides a spatial filter; and transmitting to a base station of the serving cell information on said determined first antenna gain.

Fig. 3

**Description**

TECHNOLOGICAL FIELD

Embodiments of the present disclosure relate to beam configuration. Some relate to correcting for the effects of changes in beam configuration.

BACKGROUND

A node of a radio telecommunications network, such as a radio terminal or base station, can use a variable antenna configuration for communication in the radio telecommunication network. In some examples, a node can select between spatially diverse antenna panels or antennas. In some examples to perform beamforming, a node can selectively use or controllably use different antenna elements within an antenna array of an antenna panel, for example use different weights for the antenna elements. In some examples, the antenna configuration at a radio terminal can be controlled, at least partially, by the radio terminal.

BRIEF SUMMARY

According to an aspect, there is provided the subject matter of the independent claims. Embodiments are defined in the dependent claims. The scope of protection sought for various embodiments is set out by the independent claims.

The embodiments and features, if any, described in this specification that do not fall under the scope of the independent claims may be interpreted as examples useful for understanding various embodiments.

According to various, but not necessarily all, embodiments there is provided an apparatus comprising means for determining orientation of the apparatus; receiving reference signals of a non-serving cell; measuring signal quality of the non-serving cell for a beam that is used for the serving cell; determining based on the orientation of the apparatus a first antenna gain index for the non-serving cell with said beam in response to adding the non-serving cell as a secondary cell in multicarrier connectivity with a serving cell using the same antenna configuration for shaping an antenna beam that provides a spatial filter; and transmitting to a base station of the serving cell information on said determined first antenna gain.

In some but not necessarily all examples, the apparatus comprises means for determining based on the orientation of the apparatus a second antenna gain index for the serving cell with said beam in response to adding said non-serving cell as the secondary cell in multicarrier connectivity with a serving cell using the same beam; and transmitting to the base station information on said determined second antenna gain.

In some but not necessarily all examples, the apparatus comprises means for storing information on the orientation of the apparatus; detecting change in the orientation of the apparatus; and determining said first antenna gain for the non-serving cell and said second antenna gain for the serving cell based on the stored information on the orientation of the apparatus and on a determined change in the orientation of the apparatus.

In some but not necessarily all examples, the apparatus comprises means for determining change in orientation of antenna arrays of the apparatus based on the change in orientation of the apparatus; and determining the first antenna gain index for the non-serving cell and the second antenna gain index for the serving cell based on a determined change in the orientation of the antenna arrays of the apparatus.

In some but not necessarily all examples, the apparatus comprises means for: storing information on the beam of the serving cell; detecting change in the beam of the serving cell; determining the first antenna gain index for the non-serving cell and the second antenna gain index for the serving cell based on the stored information on the beam of the serving cell and on the change in the beam of the serving cell; and transmitting to a base station of the serving cell information on said determined first and second antenna gain.

In some but not necessarily all examples, the apparatus measures the signal quality of a non-serving cell by using a wide beam measurement and a narrow beam measurement applied to the beam that is used for the serving cell. In some but not necessarily all examples, the apparatus measures the signal quality of the non-serving cell in response to the change exceeding a threshold value in the signal quality of the serving cell or in response to reaching a timer limit. In some but not necessarily all examples, the apparatus is configured to receive said threshold value from network equipment. In some but not necessarily all examples, the apparatus is configured to receive said timer limit from network equipment.

According to various, but not necessarily all, embodiments there is provided a method comprising: determining orientation of the apparatus; measuring signal quality of a non-serving cell for a beam that is used for the serving cell; determining based on the orientation of the apparatus a first antenna gain index for the non-serving cell with said beam in response to adding the non-serving cell as a secondary cell in multicarrier connectivity with a serving cell using the same beam; determining based on the orientation of the apparatus a second antenna gain index for the serving cell with said beam in response to adding said non-serving cell as the secondary cell in multicarrier connectivity with the serving cell using the same beam; and transmitting to a base station of the serving cell information on said determined first and second antenna gain.

According to various, but not necessarily all, embodiments there is provided a computer program that when run on one or more processors enables: determining orientation of the apparatus; measuring signal quality of a non-serving cell for a beam that is used for the serving cell; determining based on the orientation of the apparatus a first antenna gain index for the non-serving cell with said beam in response to adding the non-serving cell as a secondary cell in multicarrier connectivity with a serving cell using the same beam; determining based on the orientation of the apparatus a second antenna gain index for the serving cell with said beam in response to adding said non-serving cell as the secondary cell in multicarrier connectivity with the serving cell using the same beam; and transmitting to a base station of the serving cell information on said determined first and second antenna gain.

BRIEF DESCRIPTION OF THE DRAWINGS

In the following, some embodiments will be described with reference to the accompanying drawings, in which

Figure 1 shows an example of the subject matter described herein;
Figure 2a and 2 b show examples of the subject matter described herein;
Figure 3 shows an example of the subject matter described herein;
Figure 4 shows an example of the subject matter described herein;
Figure 5 shows an example of the subject matter described herein;
Figure 6 shows an example of the subject matter described herein;
Figures 7a, 7b and 7c show examples of the subject matter described herein;
Figure 8 shows an example of the subject matter described herein.

DETAILED DESCRIPTION

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

In the following, different exemplifying embodiments will be described using, as an example of an access architecture to which the embodiments may be applied, a radio access architecture based on long term evolution advanced (LTE Advanced, LTE-A) or new radio (NR, 5G), or 6G, without restricting the embodiments to such an architecture, however. A person skilled in the art will realize that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

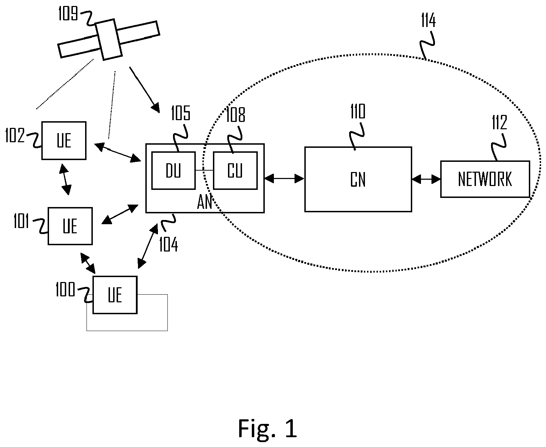

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows terminal devices or user devices 100, 101, and 102 configured to be in a wireless connection on one or more communication channels in a cell with an access node (such as (e/g)NodeB) 104 providing the cell. (e/g)NodeB refers to an eNodeB or a gNodeB, as defined in 3GPP specifications. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used not only for signalling purposes but also for routing data from one (e/g)NodeB to another. The (e/g)NodeB is a computing device configured to control the radio resources of communication system it is coupled to. The NodeB may also be referred to as a base station, an access point, an access node, or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, portable navigation device, body wearable electronic device, vehicle (automobile, motorcycle, cycle, vessel, aircraft, etc) mounted or integrated electronic device, portable medical or healthcare device, robots and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and typically fully centralized in the core network. The low-latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 105) and non-real time functions being carried out in a centralized manner (in a centralized unit, CU 108).

It should also be understood that the distribution of functions between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or node B (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway, maritime, and/or aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 109 in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Mobile Communications at mmW frequencies (e.g. FR2 around 28GHz & 39 GHz and beyond 52.6GHz) suffers from high pathloss, e.g. 100 dB for 100 meters at 28 GHz (when calculated for wave length sized unit antennas). In addition, power amplifiers with decent transmit power at mmW are more challenging than for FR1 operation, and larger bandwidths are used in FR2 and beyond, both of which decrease the power spectral density. These effects massively threaten the link budget (i.e. decreases the UE range/cell size).

In NR, the higher pathloss is mitigated by beamforming at the base station (gNB), but also at the UE side in FR2, where antenna panels consisting of an array of antenna elements, further referred to as panels are used to achieve beamforming gain, which compensates for the link budget loss. Unfortunately, high beamforming gain also implies a high spatial filtering, i.e. the higher the beamforming gain the tighter/narrower are the beams. Each panel on the UE can exhibit different antenna gain and radiation beam widths. For example, different antenna array configurations may cause one antenna element of the antenna panel being active to exhibit a 90-degree Half-Power Beam Width (HPBW), or two antenna elements being active to exhibit a 45-degrees HPBW or four antenna elements being active to exhibit a 22 degree HPBW. These are only non-limiting examples.

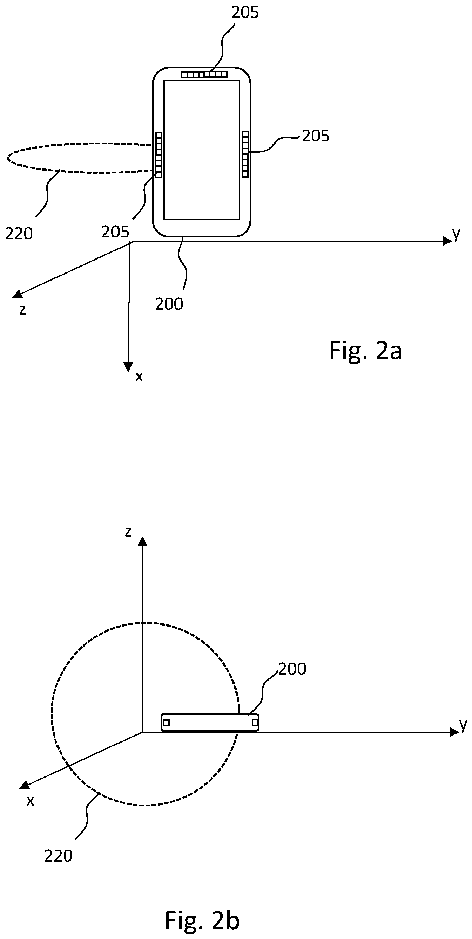

Figures 2a and 2b illustrate the beam formation in a User Equipment with antenna panels having Uniform Linear Array (ULA) consisting of patch antenna elements. The combined patch array can achieve a high antenna gain, where every doubling of number of patches typically gives in the order of 3dB extra gain. However, the gain comes at the expense of beamwidth especially in one orientation. This is illustrated e.g. for a 1x8 element patch antenna panel 205 in Figure 2a and forming beam 220. The same beam 220 is shown in figure 2b from a different orientation, so that in figure 2a the view is from the front view of the UE 200 and in figure 2b the view is from the top view of the UE 200. There is no difference in antenna gain but the beamwidth is very different between the two orientations in figures 2a and 2b.

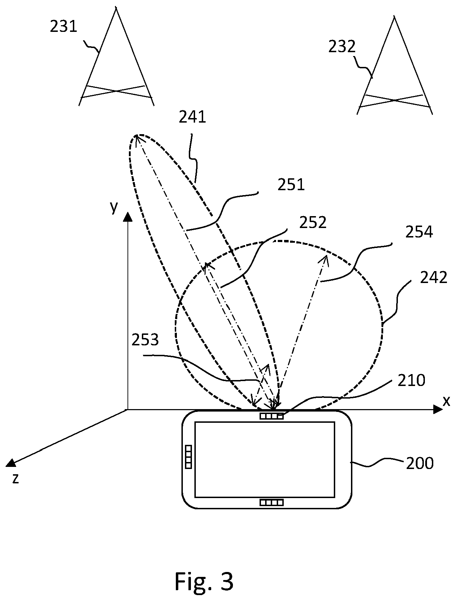

Figure 3 illustrates the UE 200 narrow beam 241 aligned with serving cell 231 and the UE 200 broad beam 242 used to simultaneously cover serving cell 231 and target cell 232. The narrow beam 241 can be used if the UE 200 only communicates with one of the cells 231, 232, or if cells 231, 232 are collocated. The wide beam 242 is needed if the UE 200 needs to communicate simultaneously with cell 231 and cell 232 on the same antenna panel 210, assuming that cell 231 and cell 232 are non-collocated, hence arriving with a wide angular difference on the UE 200 antenna panel 210. This is the case when the UE 200 radio frequency (RF) architecture utilizes only a single-chain in the RF front-end (i.e. one set of phase shifters) per antenna panel, therefore the UE 200 can only use one beam per antenna panel at a time. The wide beam 242 can for instance be achieved by using a single antenna element in the antenna panel 210 and the narrow beam 241 can be achieved by using for example all elements of the antenna panel 210. There may be more beamwidths to choose from depending on the size of the antenna panel and the number of active antenna elements.

The UE 200 may be configured to acquire information on obtainable antenna gain if the antenna configuration is refined to use more antenna elements for a measured cell. The obtainable (extra) antenna gain is defined as the difference between the antenna gain of the narrowest beam and the broadest beam for a specific antenna array. The information on the obtainable antenna gain may be quantized in steps e.g. so that an index refers to how many antenna elements are used to form the beam. The information on the obtainable antenna gain is also known as ACCI (Antenna Correction Configuration Index). ACCI may be used in the situation when a handover from a current serving cell is made to a new target cell.

The UE 200 maybe configured to acquire information on obtainable antenna gain for the communication with current serving cell 231 if a secondary cell 232 is added for multicarrier communication. This is called the first antenna gain and it is obtainable for the non-serving cell. It is also known as SCell value or ACCI_SCell. The term "multicarrier connectivity" comprises either carrier aggregation (CA) or multi-connectivity (MC), such as dual connectivity (DC), or both.

The UE200 may be configured to acquire information on impact on obtainable antenna gain for the communication with current serving cell 231 if a secondary cell 232 is added for multicarrier communication. If the non-serving cell 232 would be served with a different beamwidth from the same antenna panel 210 than the current beam 241, this would impact the antenna gain 251 towards current serving cell 231. This impact on the antenna gain towards current serving cell is called the secondary antenna gain and it is obtainable for the serving cell. It is also known as PCell value or ACCI_PCell.

ACCI_SCell and ACCI_PCells may be added to enable the gNB to predict the RSRP (Reference Signal Received Power) level of the SCell and PCell in case the SCell is added.

According to various, but not necessarily all, embodiments there is provided an apparatus comprising means for acquiring ACCI_PCell and ACCI_SCell values in the most accurate and less resource consuming process. The UE may measure obtainable antenna gains based on UE orientation and measurements of the secondary cell. The target secondary cell (e.g. a neighbouring cell) is measured both with a broad beam and with the refined beam of the serving (primary) cell. The difference in the measured RSRP is the obtainable extra gain. The RSRP measured with the broad beam and the ACCI_SCell value may be reported to the serving cell.

The ACCI_SCell and ACCI_PCell values are very dependent on the UE orientation. The UE may comprise means for orientation detection, or an indication of the orientation. This is information that is already existing in the UE. The RSRP measurements provide higher accuracy but also include costs, extra delay and UE power consumption from measuring DL reference signals on SCell. The signal quality may be measured with the Reference Signal Received Power (RSRP), but also various other metrics such Signal to Interference & Noise Ratio (SINR), Automatic Neighbor Relation (ANR) and Reference Signal Received Quality (RSRQ). Orientation-based and measurement-based methods are not mutually exclusive, and the measurement-based method may be a fall back of the orientation-based method when higher accuracy is needed. As such, the UE may support either one of the methods or it may support both methods in a complementary manner to select the best method depending on the circumstances as explained later in this section.

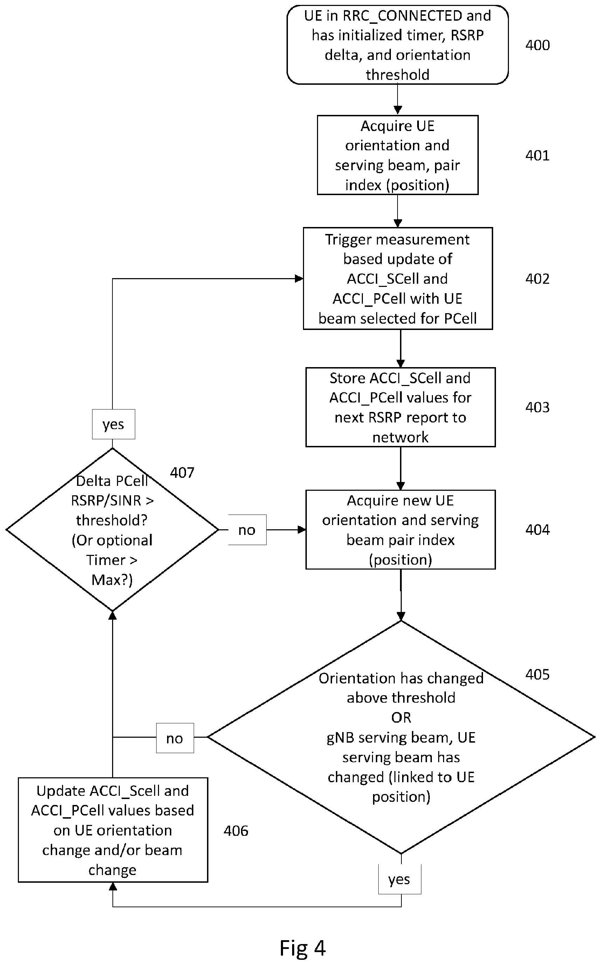

Figure 4 illustrates the combined orientation-based and measurement-based method to acquire ACCI-SCell and ACCI_PCell values.

- Block 400: Initializing a timer and a RSRP threshold. They may be configured by the network or specified locally in UE 200. Likewise, the UE 200 may specify an orientation value and a threshold for the change in orientation of UE 200 locally.
- Block 401: Acquiring orientation of the UE 200 (e.g. from a gyroscope) and derive orientation of the antenna panel of the serving cell 231. Also acquire the serving beam pair index, i.e. information on which UE beam and which serving cell beam the UE 200 is currently using.
- Block 402: Triggering the measurement-based update of ACCI_SCell and ACCI_PCell. The UE 200 performs in addition to the normal wide beam SSB (Synchronization Signal Block) RSRP of SCell a narrow beam SSB RSRP measurement of SCell, using the beam 241 selected for PCell, i.e. UE 200 measures the SCell with the refined beam 241 of PCell, in order to identify if the same narrow beam may be suitable for both TRPs.
- Block 403: Store the updated ACCI_SCell and ACCI_PCell values for next RRM (Radio Resource Management) reporting of neighbor cell RSRP values to the gNB.
- Block 404: The UE 200 may acquire its orientation from internal sensors like e.g. gyroscope and map this to an antenna panel 210 orientation of the UE 200. UE 200 serving beam 241 and serving cell 231 beam is acquired (may be used to identify if the UE 200 orientation has changed in block 405).
- Block 405: The UE 200 checks if the orientation has changed significantly or, alternatively, if the serving beam pair have changed. If this is the case, the UE 200 will map the new orientation to new ACCI_SCell and ACCI_PCell values in block 406.
- Block 406: The antenna 210 panel orientation may be used to estimate the ACCI_SCell and ACCI_PCell. A change in UE 200 orientation can enable or disable the UE 200 being able to detect PCell and SCell on the same narrow beam. If disabled, the UE 200 reverts to broad beam 242 and must decrease its gain (by e.g. 6 dB for a 1x4 array). If change in orientation is along vertical axis, UE 200 may keep ACCI values. If change in orientation is along horizontal axis, UE 200 may revert to minimum ACCI values (meaning UE 200 cannot detect both cells with the same narrow beam any longer).
- Block 407: If the RSRP / SINR (Signal-to-Noise and Interference Ratio) of the PCell (or serving cell) has not changed beyond a threshold compared to last measurement-based acquisition of ACCI_SCell and ACCI_PCell, the UE 200 may continue to rely on the orientation-based method. But if the RSRP / SINR change is beyond the threshold, the UE 200 shall fall back to the measurement-based approach. In addition, the UE 200 may also trigger the measurement-based approach with a certain periodicity to ensure the reliability of ACCI_SCell.

The measurement method (of SCell with PCell UE beam) is complimentary to the orientation method to increase reliability of the ACCI_SCell and ACCI_PCell calculations.

The UE may choose to change the beamwidth back to the wide beam used for SSB in case the beamwidth in the horizontal plane is narrow. In the orientation-based approach, the UE may map an orientation to beamwidth in the horizontal plane. In the measurement-based approach the UE may determine that the beam is too narrow in case ACCI_SCell drops below 0, meaning that the narrow beam performs worse than the wide SSB beam (refer to equation 1).

$$ACCI\_SCell = \frac{RSRP_{SSB\_NB} - RSRP_{SSB\_WB}}{ACCI_{step\_size}}, \text{ (Equation 1)},$$

where

RSRP$_{SSB\_NB}$ is the RSRP for the UE narrow beam beam for the serving cell,
RSRP$_{SSB\_WB}$ is the RSRP for the UE wide beam for the serving cell,
ACCI$_{step\_size}$ is the quantization step.

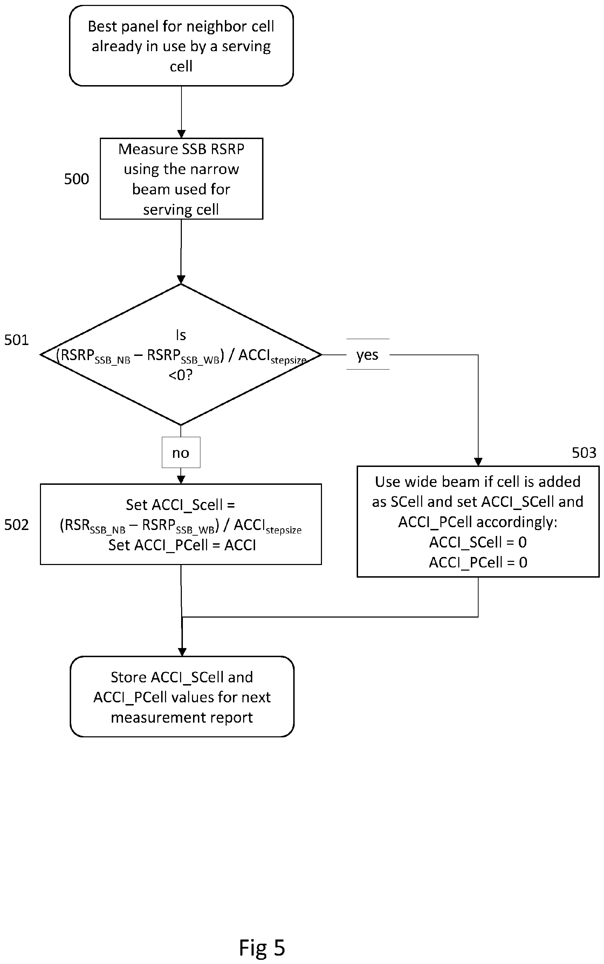

The beamwidth selection process done by the UE in block 402 may be further illustrated in Figure 5.

- Block 500: Performing RSRP measurements on SCell using the narrow PCell beam. This value is named RSRP$_{SSB\_NB}$.
- Block 501: If equation 1 will result in a value less than zero (or alternatively a defined threshold), then proceeding to block 503 else proceeding to block 502.
- Block 502: Using the narrow beam for both PCell and SCell, calculating ACCI_SCell as the shown in equation 1 and setting ACCI_PCell = ACCI. (There may be cases where the UE chooses to use an in-between beamwidth. In such cases, the ACCI_PCell cannot be set equal to ACCI but would instead need to be calculated according to equation 1. The RSRP$_{SSB\_NB}$ should be measured using the in-between beamwidth and the RSRP$_{SSB\_WB}$ should be measured using the wide SSB beam.)

- Block 503: If the neighbour cell is added, using the wide common beam used for SSB and setting the ACCI_SCell and ACCI_PCell to 0 reflecting that the minimum directivity has been selected.

Referring earlier to Figure 3, it is clear that with narrow beam 241 radiation pattern of the UE 200 the beamwidth is very dependent on the orientation and tilt of the UE 200 (or antenna panel 210). The orientation of the UE 200 results in a narrow beam in the plane with the cells 231 and 232. The narrow beam is directed towards cell 231 and therefore gain 251 is much larger than gain 253 towards cell 232. On the other hand, a wide beam 242 is able to serve both cells 231 and 232 would achieve smaller antenna gains 252, 254, but on the other hand would achieve higher antenna gain 254 towards cell 232 compared to antenna gain 253.

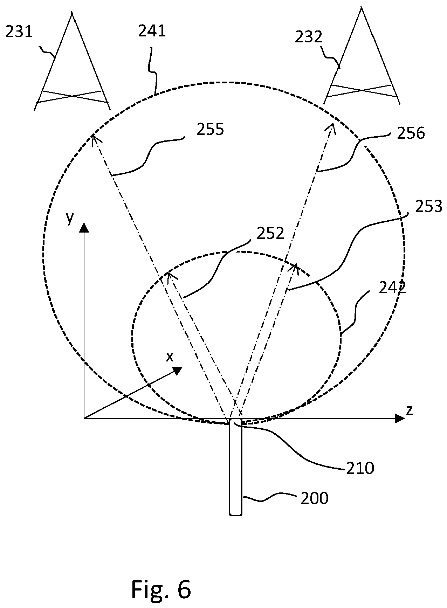

However, when the UE 200 is rotated, as shown in the figure 6, the beam 241 is wide in the plane with the cells 231 and 232 and therefore gain 256 may become similar to gain 255. Figure 6 illustrates UE 200 viewed from the top and rotated 90 degrees around the y-axis in the figure 2. The changing of the UE 200 orientation will enable or disable UE 200 being able to detect PCell and SCell on a same narrow beam 241. If disabled, the UE 200 reverts to a broad beam 242, which has an antenna gain, which is 6 dB less than the narrow beam 241 for a 1x4 array. The UE may use internal sensors, e.g. a gyro, to acquire it's orientation and thereby estimate the beamwidth in the horizontal plane. If the UE 200 evaluates that the beam used for PCell has a wide beamwidth in the horizontal plane relative to the angular directions covered by the antenna panel 210, then it can set the ACCI_SCell to an identical value as the ACCI. In the opposite case, where the UE 200 evaluates that the beam used for PCell has a narrow beam in the horizontal plane, the UE 200 shall assume that the SCell cannot be covered with the same panel and therefore it shall revert to the broad beam and set ACCI_PCell and ACCI_SCell to 0. This orientation-based approach will be able to give an estimate of the ACCI_SCell value, but if the step size is e.g. 3dB, then the UE 200 reports a correct value as long as the 3dB beamwidth covers the SCell direction. To be able to estimate the horizontal beamwidth for more orientations, the horizontal beamwidth may be characterized for different beams and orientations and stored as a table in the UE 200, or it may be able to calculate it. In cases where the UE 200 is not able to make an estimate of the beamwidth, it shall assume that the wide SSB beam is needed and therefore set the ACCI_SCell and ACCI_PCell to 0. The ACCI_PCell is derived from the chosen beam. If the narrow beam is used, the ACCI_PCell is set equal to current ACCI of PCell. However, if the UE 200 currently uses the wide beam the ACCI_PCell is set to 0.

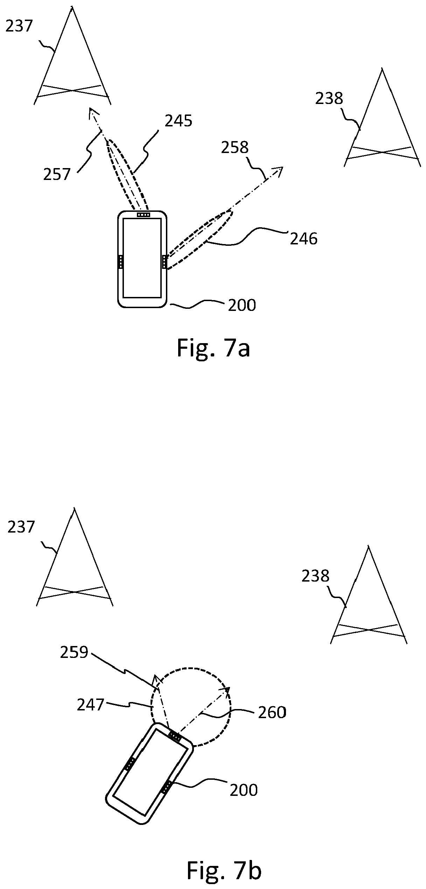

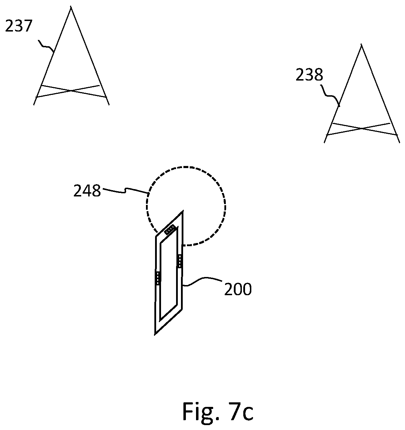

Figure 7a, 7b and 7c illustrate the achievable antenna gain in 3 different use cases, where the UE is assumed to have antenna panels with ULA of 4 antenna elements, in which each antenna element may be, and not limited to, a patch antenna. Such a panel may have up to 6dB difference in antenna gain between an independent narrow beam versus a common wide beam. Each of the 3 use cases are briefly described in the following:

- In figure 7a, the cells 237, 238 are served by different antenna panels of the UE 200. In this case the UE 200 can perform independent beam refinement towards each cell 237, 238 separately and thereby achieve an additional antenna gain of e.g. 6dB compared to the antenna gain of the wide beam used for SSB RSRP measurements. There is no need for orientation awareness in this case. If the best panel for the neighbour cell 238 is not already in use, the UE 200 is assumed to be able to make an independent beam 246.
- In figure 7b the cells 237, 238 are served by a common antenna panel and the antenna panel is oriented as shown in the figure. The UE 200 has chosen a wide beam 247 to cover both the directions to the two cells 237, 238. In the shown example, it is assumed that the UE 200 is using the same wide beam 247as it uses for SSB. The antenna gains 259, 260 are essentially on the same level for cells 237,238 respectively and therefore the UE 200 does not get additional antenna gain, so the delta gain is 0dB.
- In figure 7c, the cells 237, 238 are served by a common antenna panel and the UE 200 panel is in a different orientation as the one shown in the figure 7b. In this case the narrow beam 248 can still be used to cover cells 237, 238 with a wide angular distance, since the narrow beam 248 is still wide when observed from the illustrated orientation of the UE corresponding to the beam shape illustrated in Figure 7a. Since the UE 200 is using a narrow beam, it has about 6dB more gain compared to the beam used for SSB and this is also true for a wide angular range, meaning that the UE 200 can cover both cells 237, 238 with 6dB more gain.

Acquiring ACCI_SCell and ACCI_PCell based on orientation has the advantage that the required number of measurements may be reduced and thereby the UE may achieve higher throughput. The measurement-based approach is the reliable approach in case orientation information is not available or in case the UE cannot map the current orientation to ACCI_SCell and ACCI_PCell values. ACCI_SCell enables the network to determine the optimum SCell when the antenna beam is shared among non-collocated PCell and SCell. ACCI_PCell enables the network to evaluate the impact on PCell antenna gain by sharing the same antenna beam between SCell and PCell. Knowing the PCell impact of adding and SCell allows the network to evaluate if it makes sense to add an SCell at the cost of a loss in PCell antenna gain. This evaluation may e.g. depend on the load of the PCell and SCell, since the network may want to offload the PCell and therefor accepts a lower PCell antenna gain.

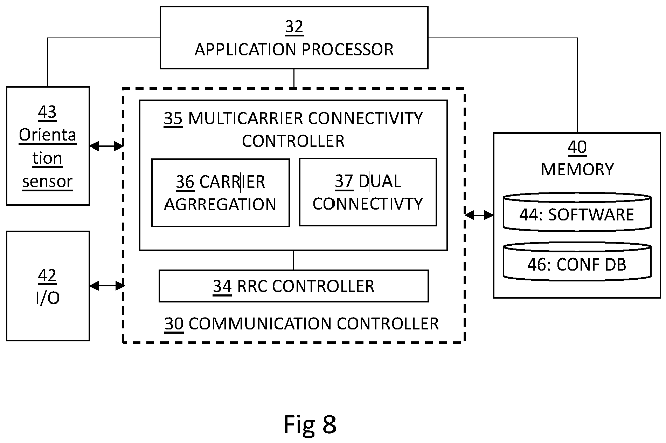

Figure 8 illustrates an apparatus comprising a processing circuitry, such as at least one processor, and at least one memory 40 including a computer program code (software) 44, wherein the at least one memory and the computer program code (software) are configured, with the at least one processor, to cause the apparatus to carry out the process of Figure 4 and Figure 5 or any one of its embodiments described above for the terminal device. The apparatus may be for the terminal device. The apparatus may be a circuitry, a module or an electronic device realizing some embodiments of the disclosure in the terminal device. The apparatus carrying out the above-described functionalities may thus be comprised in such a device, e.g. the apparatus may comprise a circuitry such as a chip, a chipset, a processor, a micro controller, or a combination of such circuitries for the terminal device. The processing circuitry may realize a communication controller 30 controlling communications with the access nodes 231, 232 of the cellular network infrastructures in the above-described manner. The communication controller may comprise a RRC (Radio Resource Control) controller 34 configured to establish and manage RRC connections and transfer of data over the RRC connections via the above-described multi-connectivity scenario.

The communication controller 30 may further comprise a multicarrier connectivity controller 35 configured to multicarrier connections of the terminal device. multicarrier connectivity controller 35 may comprise a carrier aggregation controller 36 configured to perform the above-described procedures during the carrier aggregation, for example. As another example, the multicarrier connectivity controller 35 may comprise a dual connectivity controller 37 configured to perform the above-described procedures during the dual connectivity situation. As a consequence, both controllers may use the received parameters of the target non-serving cells to add a secondary cell or a primary secondary cell.

Referring to Figure 8, the memory 40 may be implemented using any suitable data storage technology, such as semiconductor-based memory devices, flash memory, magnetic memory devices and systems, optical memory devices and systems, fixed memory and removable memory. The memory 40 may comprise a configuration database 46 for storing configuration parameters, e.g. the various handover parameters received in connection with the handover preparation such as the conditions for triggering the handover.

The apparatus may further comprise a communication interface 42 comprising hardware and/or software for providing the apparatus with radio communication capability with one or more access nodes, as described above. The communication interface 42. The communication interface 42 may comprise hardware and software needed for realizing the radio communications over the radio interface, e.g. according to specifications of an LTE or 5G radio interface.

The apparatus may further comprise orientation sensor 43, which is used to detect the spatial orientation of the apparatus. The orientation information may be provided to the multicarrier connectivity controller 35 and/or to the application processor 32. The detection of the orientation may be implemented e.g. with a gyroscope, acceleration sensors or geomagnetic sensors.

The apparatus may further comprise an application processor 32 executing one or more computer program applications that generate a need to transmit and/or receive data through the communication controller 30. The application processor may form an application layer of the apparatus. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application. The application processor may generate data to be transmitted in the wireless network.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the disclosure. The processes or methods described in connection with Figures 4 to 5 or any of the embodiments thereof may also be carried out in the form of one or more computer processes defined by one or more computer programs. The blocks as described in the description may represent steps in a method and/or sections of code in a computer program or software, and that the illustration of a particular order to the blocks does not necessarily imply that there is a required or preferred order of the blocks and the order and arrangement of the blocks may be varied. In addition, it may be possible for some blocks to be omitted.The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

Even though the embodiments have been described above with reference to examples according to the accompanying drawings, it is clear that the embodiments are not restricted thereto but can be modified in several ways with-in the scope of the appended claims. Therefore, all words and expressions should be interpreted broadly, and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1. An apparatus comprising:

   means for determining orientation of the apparatus;
   means for receiving reference signals of a non-serving cell;
   means for measuring signal quality of the non-serving cell for a beam that is used for the serving cell;
   means for determining based on the orientation of the apparatus a first antenna gain index for the non-serving cell with said beam in response to adding the non-serving cell as a secondary cell in multicarrier connectivity with a serving cell using the same antenna configuration for shaping an antenna beam that provides a spatial filter; and
   means for transmitting to a base station of the serving cell information on said determined first antenna gain.

2. The apparatus as claimed in claim 1, comprising means for determining based on the orientation of the apparatus a second antenna gain index for the serving cell with said beam in response to adding said non-serving cell as the secondary cell in multicarrier connectivity with a serving cell using the same beam; and
   means for transmitting to the base station information on said determined second antenna gain.

3. The apparatus as claimed in any preceding claim comprising: means for

   storing information on the orientation of the apparatus;
   means for detecting change in the orientation of the apparatus; and
   means for determining said first antenna gain for the non-serving cell and said second antenna gain for the serving cell based on the stored information on the orientation of the apparatus and on a determined change in the orientation of the apparatus.

4. The apparatus as claimed in claim 3 comprising means for determining change in orientation of antenna arrays of the apparatus based on the change in orientation of the apparatus; and
   means for determining the first antenna gain index for the non-serving cell and the second antenna gain index for the serving cell based on a determined change in the orientation of the antenna arrays of the apparatus.

5. The apparatus as claimed in any preceding claim comprising:

   means for storing information on the beam of the serving cell;
   means for detecting change in the beam of the serving cell;
   means for determining the first antenna gain index for the non-serving cell and the second antenna gain index for the serving cell based on the stored information on the beam of the serving cell and on the change in the beam of the serving cell; and
   means for transmitting to a base station of the serving cell information on said determined first and second antenna gain.

6. The apparatus as claimed in any preceding wherein the means are configured to measure the signal quality of a non-serving cell by using a wide beam measurement and a narrow beam measurement applied to the beam that is used for the serving cell.

7. The apparatus as claimed in any preceding claim wherein the means are configured to measure the signal quality of the non-serving cell in response to the change exceeding a threshold value in the signal quality of the serving cell or in response to reaching a timer limit.

8. The apparatus as claimed in claim 7 wherein the means are configured to receive said threshold value from network equipment.

9. The apparatus as claimed in any of claims 7-8 wherein the means are configured to receive said timer limit from network equipment.

10. A user equipment comprising the apparatus of any of claims 1 to 9.

11. A method comprising:

determining orientation of the apparatus;
measuring signal quality of a non-serving cell for a beam that is used for the serving cell;
determining based on the orientation of the apparatus a first antenna gain index for the non-serving cell with said beam in response to adding the non-serving cell as a secondary cell in multicarrier connectivity with a serving cell using the same beam;
determining based on the orientation of the apparatus a second antenna gain index for the serving cell with said beam in response to adding said non-serving cell as the secondary cell in multicarrier connectivity with the serving cell using the same beam; and
transmitting to a base station of the serving cell information on said determined first and second antenna gain.

12. A computer program product embodied on a computer-readable medium and comprising a computer program code readable by a computer, wherein the computer program code configures the computer to carry out a computer process in an apparatus, the computer process comprising:

determining orientation of the apparatus;
measuring signal quality of a non-serving cell for a beam that is used for the serving cell;
determining based on the orientation of the apparatus a first antenna gain index for the non-serving cell with said beam in response to adding the non-serving cell as a secondary cell in multicarrier connectivity with a serving cell using the same beam;
determining based on the orientation of the apparatus a second antenna gain index for the serving cell with said beam in response to adding said non-serving cell as the secondary cell in multicarrier connectivity with the serving cell using the same beam; and
transmitting to a base station of the serving cell information on said determined first and second antenna gain.

Fig. 1

Fig. 2a

Fig. 2b

Fig. 3

UE in RRC_CONNECTED and has initialized timer, RSRP delta, and orientation threshold — 400

Acquire UE orientation and serving beam, pair index (position) — 401

Trigger measurement based update of ACCI_SCell and ACCI_PCell with UE beam selected for PCell — 402

Store ACCI_SCell and ACCI_PCell values for next RSRP report to network — 403

Delta PCell RSRP/SINR > threshold? (Or optional Timer > Max?) — 407

Acquire new UE orientation and serving beam pair index (position) — 404

yes

no

Orientation has changed above threshold OR gNB serving beam, UE serving beam has changed (linked to UE position) — 405

no

Update ACCI_Scell and ACCI_PCell values based on UE orientation change and/or beam change — 406

yes

Fig 4

Best panel for neighbor cell
already in use by a serving
cell

500 — Measure SSB RSRP
using the narrow
beam used for
serving cell

501 — Is
$(RSRP_{SSB\_NB} - RSRP_{SSB\_WB}) / ACCI_{stepsize} < 0?$ — yes

no

502 — Set ACCI_Scell =
$(RSR_{SSB\_NB} - RSRP_{SSB\_WB}) / ACCI_{stepsize}$
Set ACCI_PCell = ACCI

503
Use wide beam if cell is added
as SCell and set ACCI_SCell and
ACCI_PCell accordingly:
ACCI_SCell = 0
ACCI_PCell = 0

Store ACCI_SCell and
ACCI_PCell values for next
measurement report

Fig 5

Fig. 6

Fig. 7a

Fig. 7b

237

238

248

200

Fig. 7c

Fig 8

Europäisches
Patentamt

European
Patent Office

Office européen
des brevets

**EUROPEAN SEARCH REPORT**

Application Number

EP 22 17 6669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/030442 A1 (LAGHATE MIHIR VIJAY [US] ET AL) 27 January 2022 (2022-01-27) * paragraphs [0006] - [0008], [0025], [0095], [0133], [0140], [0149], [0150], [0152], [0155], [0159] - paragraphs [0161], [0164], [0166], [0168] - [0170], [0173] - [0180], [0184], [0185], [0213]; figures 5,7,8,9 * | 1-12 | INV. H04B7/024 H04B7/08 |

-----

TECHNICAL FIELDS
SEARCHED (IPC)

H04B

The present search report has been drawn up for all claims

| Place of search | Date of completion of the search | Examiner |
|---|---|---|
| Munich | 4 November 2022 | Panahandeh, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 22 17 6669

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2022

| Patent document cited in search report | Publication date | Patent family member(s) | Publication date |
|---|---|---|---|
| US 2022030442 A1 | 27-01-2022 | US 2022030442 A1 | 27-01-2022 |
| | | WO 2022026985 A1 | 03-02-2022 |

EPO FORM P0459

For more details about this annex : see Official Journal of the European Patent Office, No. 12/82